# EUROPÄISCHE PATENTSCHRIFT

(11) **EP 1 323 224 B1**
(45) Veröffentlichungstag und Bekanntmachung des Hinweises auf die Patenterteilung: **20.12.2006**
(21) Anmeldenummer: 01978180.6
(22) Anmeldetag: 21.09.2001
(51) Int. Cl.: H02K 9/06, H02K 15/00, H02K 17/16

(54) **LÜFTERVORRICHTUNG MIT ELEKTROMAGNETISCHER KUPPLUNG**
VENTILATION DEVICE WITH ELECTROMAGNETIC COUPLING
DISPOSITIF VENTILATEUR A ACCOUPLEMENT ELECTROMAGNETIQUE

(30) Priorität: 26.09.2000 DE 10047592
(43) Veröffentlichungstag der Anmeldung: 02.07.2003
(73) Patentinhaber: SIEMENS AKTIENGESELLSCHAFT, 80333 München (DE)
(72) Erfinder: PITTIUS, Ekkehard, 91154 Roth (DE)
(86) Internationale Anmeldenummer: PCT/DE2001/003654
(87) Internationale Veröffentlichungsnummer: WO 2002/027896

(56) Entgegenhaltungen:
- EP-A- 0 930 692
- EP-A- 1 024 295
- DE-A- 1 538 974
- FR-A- 2 778 327
- GB-A- 2 087 933
- US-A- 5 783 888

## Beschreibung

Die vorliegende Erfindung betrifft eine Lüftervorrichtung mit einem Lüfterrad, das eine Nabe zur Befestigung des Lüfterrads auf einer Welle aufweist. Darüber hinaus betrifft die vorliegende Erfindung eine elektrische Maschine mit einer derartigen Lüftervorrichtung und entsprechende Herstellungsverfahren.

Lüftervorrichtungen werden in der Regel bei Elektromotoren mit hoher Leistung eingesetzt, bei denen die natürliche Kühlung durch das umgebende Medium nicht mehr ausreicht. Zum einen besteht die Möglichkeit die Elektromotoren aktiv zu belüften, d.h. ein zusätzlicher an den Elektromotor angebrachter Lüftermotor mit Lüfterrad sorgt für die Kühlung des Elektromotors. Daneben besteht die Möglichkeit, einen Elektromotor durch Eigenbelüftung zu kühlen, in dem nämlich ein Lüfterrad auf der Welle des Motors starr oder mit einer Kupplung verbunden angebracht ist.

Elektromotoren für schienen- und spurgebundene Fahrzeuge, wie Drehstrom-Bahnmotoren, werden zunehmend mit hohen Drehzahlen betrieben, um die Motor-Drehmomente und somit das Motorgewicht wie auch die Bauform klein zu halten. Gemäß der DE-B-25 14 265 ist zur Motorkühlung ein fest auf der Motorwelle angeordnetes Lüfterrad vorgesehen, das mit der jeweiligen Motordrehzahl angetrieben wird und die Umgebungsluft entweder durch den Motor oder durch spezielle Außen-Kühlkanäle saugt oder drückt. Die Nachteile eines derart auf die Motorwelle festmontierten Lüfterrads bestehen darin, dass einerseits die Kühlluftmenge immer proportional zur Motordrehzahl ist und andererseits das Lüfterrad bei hohen Drehzahlen äußerst störende Geräusche vorbringen kann.

Zur Vermeidung dieser Nachteile ist in der EP 0 826 266 B1 zur Motorkühlung ein frei drehbar auf der Motorwelle gelagertes Lüfterrad vorgesehen. Zwischen der Motorwelle und dem Lüfterrad ist eine elektromagnetische Drehzahlbegrenzungs- und Regelungseinrichtung gebildet, welche die Kühlluftförderung auf die erforderliche Kühlluftmenge begrenzt. Ab einer vorgebbaren Motordrehzahl wird die Lüfterraddrehzahl gegenüber der Motordrehzahl dadurch reduziert, dass die Mitnahmewirkung der als Schlupfkupplung ausgelegten elektromagnetischen Drehzahlbegrenzungseinrichtung mit steigender Drehzahl der Motorwelle bis beinahe zur Wirkungslosigkeit aufgehoben wird. Bei abfallender Motordrehzahl nimmt die Mitnahmewirkung wieder bis zum vollen Maße zu. Somit wird erreicht, dass die Kühlluftmenge bei niedrigen Motordrehzahlen in ausreichendem Maße zur Verfügung steht, während die zu fördernde Kühlluftmenge bei höheren oder hohen Motordrehzahlen nicht mehr proportional zur steigenden Motordrehzahl ansteigt. Ferner wird der Energieverbrauch und die Geräuschentwicklung des Lüfters insbesondere bei hohen Drehzahlen deutlich reduziert. Das dort eingesetzte Lüfterrad ist so konstruiert, dass in der Nabe des Lüfterrads eine Kurzschlusswicklung vorgesehen ist. Die Herstellung einer derartigen elektromagnetischen Schlupfkupplung ist verhältnismäßig aufwendig.

Aus der EP 1 024 295 A1 ist bekannt, dass das Lüfterrad oder die Lüfterradnabe auch aus nichtferromagnetischem Material, z.B. Aluminium, gefertigt werden kann. Da das Aluminium nicht ferromagnetisch ist, ist die Kupplungswirkung zwischen dem Aluminiumlüfterrad und der Motorwelle mit Permanentmagneten verhältnismäßig gering. Ebenso ist aus dieser Druckschrift ersichtlich, wie ein Lüfterrad in einem Lagerschild oder Gehäuse lagerbar und eine dazugehörige elektromagnetische Schlupfkupplung realisierbar ist.

Aus der Druckschrift US 5 783 888 A ist ein Elektromotor bekannt, bei dem an den Rotor ein Lüfterrad angebracht ist.

Die Leiterkomponenten des Rotors sind einteilig mit dem Lüfterrad gegossen. Dabei ist auch der magnetische Kern in den Rotor eingegossen.

Aus der Druckschrift EP 0 930 692 A2 ist ein elektromotorischer Antrieb mit Regelungseinrichtung bekannt. Diese Einrichtung wird von segmentartigen Aussparungen im magnetisch leitfähigen Material entweder der Nabe des Lüfterrads oder im Umfang der Motorwelle und dem mit Permanentmagneten bestückten Drehteil gebildet.

Aus der GB 20 87 933 A ist eine elektromagnetische Schluptkupplung bekannt, deren einteilig gegossener Käfigläuter in ein Blechpaket eingebettet ist.

Aus den oben dargestellten Nachteilen ergibt sich als die Aufgabe der Erfindung, eine Lüftervorrichtung vorzuschlagen, die einerseits einfach zu fertigen ist und andererseits gut an eine Welle elektromagnetisch koppelbar ist und eine vergleichsweise bessere Wärmeleitung ermöglicht.

Erfindungsgemäß wird diese Aufgabe durch eine Lüftervorrichtung nach Anspruch 1 gelöst.

Vorteilhafte Weiterbildungen der erfindungsgemäßen Lüftervorrichtung ergeben sich aus den Unteransprüchen.

Elektrische Maschinen, insbesondere elektromotorische Antriebe, können mit der erfindungsgemäßen Läufervorrichtung ausgestattet werden, wobei eine elektromagnetische Schlupfkupplung zwischen der Welle der elektrischen Maschine und dem Lüfterrad dadurch realisiert wird, dass eine auf die Welle montierte Permanentmagneteinrichtung mit dem Elektroblechpaket des Lüfters in Wechselwirkung tritt.

Zur Herstellung einer Lüftervorrichtung wird das erfindungsgemäße Verfahren nach Anspruch 6 vorgeschlagen.

Nach dem Aushärten des Aluminiums wird die Lüftervorrichtung in der Nabe ausgedreht, um gegebenenfalls Aluminiumreste zu entfernen, so dass das magnetisierbare Bauelement im Inneren der Nabe offen liegt und der erforderliche Luftspalt für eine elektromagnetische Schlupfkupplung eingestellt wird.

Weiterbildungen des erfindungsgemäßen Verfahrens befinden sind in dem Unteranspruch.

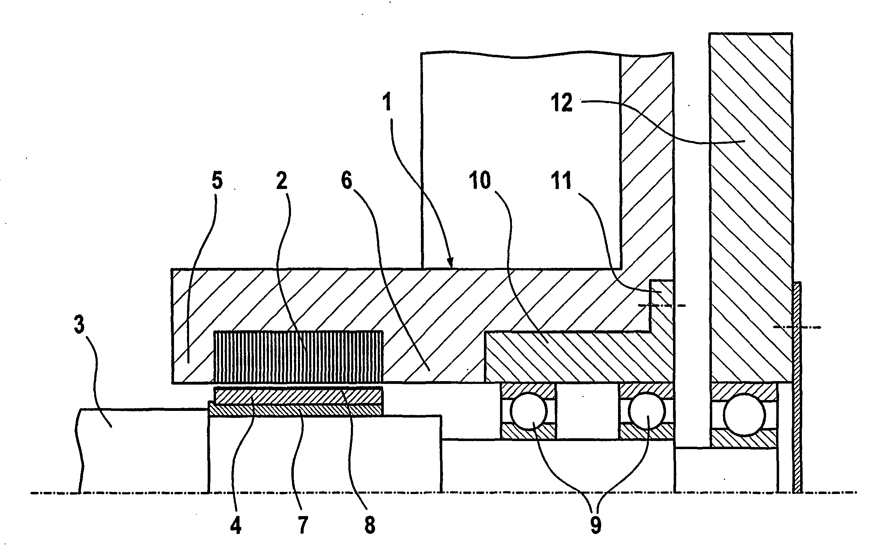

Die vorliegende Erfindung wird nun anhand der beigefügten Zeichnung näher erläutert, die eine Querschnittsansicht einer erfindungsgemäßen Läufervorrichtung zeigt, wie sie in eine elektrische Maschine eingebaut ist.

Die Zeichnung zeigt eine bevorzugte Ausführungsform der vorliegenden Erfindung. Das dort dargestellte Lüfterrad 1 ist aus Aluminium gegossen. Ein Blechpaket 2 ist in die Nabe des Lüfterrads 1 eingegossen. Die Oberfläche des Blechpakets 2 ist mit der Nabeninnenseite des Lüfterrads 1 bündig. Wesentlich ist, dass das aus Elektroblechen bestehende Blechpaket 2 einen Teil der Innenoberfläche der Lüfterradnabe bildet, damit eine möglichst starke magnetische Kopplung zu auf einer Welle 3 montierten Permanentmagneten 4 erzielbar ist. Je besser die magnetische Kopplung zwischen Welle und Lüfterrad ist, desto besser sind die Hochlaufeigenschaften des Lüfterrads 1. Insbesondere bei raschem Hochlauf der Welle 3 ist in der Regel ein ebenso rasches Hochlaufen des Lüfterrads wünschenswert. Begünstigt wird das rasche Hochlaufen des Lüfterrads auch durch geringes Eigengewicht. Diesbezüglich hat Aluminium auch Vorteile gegenüber dem bislang häufig eingesetzten Sphärogussstahl.

Die in der Lüfternabe untergebrachte Blechpaketeinrichtung 2 kann in üblicher Weise z.B. genietet, geschweißt oder geklammert sein. Darüber hinaus kann die Blechpaketeinrichtung 2 zur besseren Wärmeleitung in die Lüfternabe auch aus mehreren Teilblechpaketringen bestehen.

Die Blechpaketeinrichtung 2 ist an der Nabeninnenseite vorzugsweise mit nicht dargestellten, im wesentlichen axial verlaufenden Nuten versehen, die Wicklungsstäbe aufnehmen. Diese Wicklungsstäbe sind Teil einer Kurzschlusswicklung. Ergänzt wird die Kurzschlusswicklung durch die als Kurzschlussringe dienenden Nabenabschnitte 5 und 6, die wie das gesamte Lüfterrad 1 aus Aluminium oder einem Metall mit ähnlichen Materialeigenschaften gefertigt sind. Durch das Einbetten der Blechpaketeinrichtung 2 in die Aluminiumnabe des Lüfterrads 1 erübrigt sich somit eine eigens vorzusehende Dämpferwicklung.

Die Welle 3 trägt die Permanenteinrichtung 4 entweder direkt auf ihrer Oberfläche oder aber unter Zwischenfügung eines Stahlrings 7. Das Zwischenschalten des Stahlrings 7 hat den Vorteil, dass die Permanentmagneteinrichtung 4 bereits vor Montage auf die Welle 3 vorgefertigt werden kann. Hierzu werden einzelne Permanentmagnete auf den Stahlring aufgeklebt und anschließend an ihrem Außenumfang gegen Fliehkräfte bandagiert, wie dies durch die Bandage 8 in der Zeichnung dargestellt ist. Schließlich werden die auf dem Stahlring 7 aufgeklebten und bandagierten Permanentmagnete gegen Korrosion in üblicher Weise vergossen bzw. imprägniert. Der so vorgefertigte Stahlring 7 mit Permanentmagneteinrichtung 4 wird dann beispielsweise auf die Welle 3 aufgeschrumpft.

Die Lagerung des Lüfterrads 1 auf der Welle 3 erfolgt gemäß der Zeichnung mit zwei Lagern 9. Ebenso kann die Lagerung durch ein zweireihiges Lager oder andere übliche Lager erfolgen. Der Lagerung wird ferner eine nicht dargestellte, an sich bekannte axiale Fixierung zugeordnet. Das Lüfterrad 1 kann auch statt auf der Welle 3 in einem Lagerschild oder Gehäuse 12 der Maschine gelagert sein.

Da das Aluminium einen größeren Wärmeausdehnungskoeffizienten als der üblicherweise für Wälzlager eingesetzte Stahl besitzt, ist ein weiterer Stahlring 10 vorgesehen, der das Lüfterrad 1 auf dem Lager 9 trägt. Durch einen Flansch 11 wird der Stahlring 10 zusätzlich am Lüfterrad 1 fixiert.

Der weitere Stahlring 10 hat eine mehrfache Funktion. Zum einen schützt er das Lager 9 gegen übermäßigen Druck, den die Aluminiumnabe gegenüber dem Stahllager 9 aufgrund der unterschiedlichen Temperatur-Ausdehnungskoeffizienten ausüben würde. Des Weiteren hält der Stahlring 10 mit seinem Flansch 11 auch dann das Aluminiumlüfterrad 1, wenn sich das Aluminium gegenüber dem Stahl stärker ausgedehnt hat. Schließlich besitzt der Stahlring 10 auch den Vorteil, dass Stahl eine geringere Wärmeleitfähigkeit hat als Aluminium. Dadurch wird die Wärmeleitung beispielsweise von den Kurzschlussstäben des Blechpakets 2 unmittelbar zum Lager 9 reduziert. Damit kann verhindert werden, dass die Lagerschmierstoffe vorzeitig altern.

Anstelle oder zusätzlich zu dem Kurzschlusskäfig bzw. -käfigen kann die Lüfterradnabe auch mit Reluktanzlücken versehen werden, so dass die Schlupfkupplung nach dem Funktionsprinzip der Reluktanzmaschine arbeitet. Das Reluktanzprinzip gewährleistet in weiten Bereichen einen schlupffreien Lauf und damit Synchronbetrieb. Das Ablösemoment der Reluktanzkupplung kann entsprechend dem geforderten Lüfterdurchsatz gewählt werden.

Die Fertigung der in der Zeichnung dargestellten Lüfterradvorrichtung kann dadurch erfolgen, dass beispielsweise ein oder mehrere vorgefertigte Blechpakete ohne Wicklung in die Lüfternabe eingegossen werden. Das Aluminiumgussmaterial, das die Blechpaketeinrichtung umgibt ersetzt die sonst notwendige Wicklung. Die Dimensionierung des magnetischen Kreises erfolgt zweckmäßig so, dass preisgünstige Standardblechpakete verwendet werden können.

Die rauhe Außenkontur des Blechpakets 2, das beispielsweise mit Klammernnuten zusammengehalten wird, gewährleistet die gute Anbindung an den Aluguss. Die Nutöffnungen für den Kurzschlusskäfig sollten verhältnismäßig breit ausgelegt werden, damit das Aluminium auch ohne Druckgussverfahren radial in die Nuten eindringen kann. Wenn das Blechpaket 2 ferner in mehrere Teilblechpaketringe unterteilt wird, kann das Aluminium auch leichter in die jeweiligen Nuten eindringen, da diese entsprechend verkürzt sind und ein mehrseitiges Einfließen des Aluminiums ermöglicht wird.

Im Rahmen der Fertigstellung der Lüfterradvorrichtung kann das Blechpaket am Innendruchmesser ausgedreht werden, um die Aluminiumreste zu entfernen und den erforderlichen Luftspalt einzustellen.

Durch die einteilige Fertigung von Dämpferwicklung und Lüfter in einem Gussbauteil kann ein preisgünstiges Fertigungsverfahren erzielt werden. Das Eingießen des Blechpakets gewährleistet sehr gute elektromagnetische Eigenschaften der Lüfterradvorrichtung bei Schlupfkupplungen.

## Patentansprüche

1. Lüftervorrichtüng mit einem Lüfterrad (1), das eine Nabe zur Befestigung des Lüfterrads (1) auf einer Welle (3), in einem Lagerschild oder in einem Gehäuse (12) aufweist, wobei das Lüfterrad (1) aus Aluminium besteht und wobei ein magnetisierbares Bauelement (2) in der Nabe untergebracht ist,
**dadurch gekennzeichnet, dass**
Metallabschnitte der Nabe die Funktion einer Dämpferwicklung haben und das magnetisierbare Bauelement (2) aus mehreren Teilblechpaketringen besteht, die Teilblechpaketringe Nuten für Käfigstäbe aufweisen, das Lüfterrad (1) mit der Nabe einteilig aus Aluminium gegossen und das magnetisierbare Bauelement (2) in die Nabe eingegossen und freigedreht ist, wobei das magnetisierbare Bauelement (2) derart in die mehreren Teilblechpaketringe unterteilt wird, dass des Aluminium leichter in die jeweiligen Nuten eindringt, die entsprechend verkürzt sind, und ein mehrseitiges Einfließen des Aluminiums ermöglicht wird.

2. Lüftervorrichtung nach Anspruch 1, wobei in bzw. an die Nabe axial von dem magnetisierbaren Bauelement (2) versetzt ein erster Ring (10), vorzugsweise aus Stahl, zur Aufnahme eines Lagers für die Drehbewegung des Lüfterrads (1) auf der Welle, im Lagerschild oder im Gehäuse (12) montiert ist, und wobei der Ring (10) vorzugsweise einen Flansch (11) zur Montage an die Lüftervorrichtung aufweist.

3. Lüftervorrichtung nach einem der vorhergehenden Ansprüche, wobei die Nabe des Lüfterrads (1) Reluktanzlücken aufweist.

4. Elektrische Maschine, insbesondere elektromotorischer Antrieb, mit einer Welle (3) und einer darauf gelagerten Lüftervorrichtung nach einem der vorhergehenden Ansprüche, oder mit einem Lagerschild oder Gehäuse (12) und einer darin gelagerten Lüftervorrichtung nach einem der vorhergehenden Ansprüche sowie einer Welle (3).

5. Elektrische Maschine nach Anspruch 4, wobei auf der Welle ein zweiter Ring (7), vorzugsweise aus Stahl, fixiert ist, der an seinem Außenumfang eine Permanentmagneteinrich-tung (4) aufweist und der gegenüber der Nabe des Lüfterrads (1) so platziert ist, dass eine optimale magnetische Wechselwirkung zwischen der Permanentmagneteinrichtung (4) und dem magnetisierbaren Bauelement (2) ermöglicht ist.

6. Verfahren zur Herstellung einer Lüftervorrichtung nach einem der Ansprüche 1 bis 3 mit den Schritten:
- Bereitstellen einer Gussform für das Lüfterrad (1),
- Einfügen der mehreren Teilblechpaketringe (2) mit Nuten in den Nabenbereich der Gussform,
- Ausgießen der Gussform einschließlich der Nuten in den Teilblechpaketringen (2) mit Aluminium, wobei das magnetisierbare Bauelement (2) derart in die mehreren Teilblechpaketringe unterteilt wird, dass des Aluminium leichter in die jeweiligen Nuten eindringt, die entsprechend verkürzt sind, und ein mehrseitiges Einfließen des Aluminiums ermöglicht wird.
- nach dem Gießvorgang der Innenumfang der Nabe ausgedreht wird, damit das magnetisierbare Bauelement (2) im Inneren der Nabe offen liegt.

7. Verfahren zur Herstellung einer elektrischen Maschine nach Anspruch 4 oder 5 mit den Verfahrensschritten nach Anspruch 6, wobei die Permanentmagneteinrichtung (4) auf dem zweiten Ring (7) befestigt und gegen Fliehkraft und Korrosion geschützt wird, und der zweite Ring (7) anschließend auf die Welle (3) montiert wird.

## Claims

1. A fan device comprising a fan wheel (1) which has a hub for fastening the fan wheel (1) on a shaft (3), in a bearing bracket or in a casing (12) wherein the fan wheel (1) consists of aluminum and wherein a magnetizable component (2) is accommodated in the hub,
**characterized in that**
metal sections of the hub have the function of a damper winding and the magnetizable component (2) consists of multiple partial laminated core rings, the partial laminated core rings have slots for cage bars, the fan wheel (1) is cast integrally with the hub from aluminum and the magnetizable component (2) is cast into the hub and is recessed, wherein the magnetizable component (2) is subdivided into the multiple partial laminated core rings in such a manner that the aluminum penetrates the respective slots, which are correspondingly shortened, more easily, enabling the aluminum to flow in from more than one side.

2. The fan device as claimed in claim 1, wherein a first ring (10), preferably made of steel, is mounted in or on the hub, axially offset from the magnetizable structural element (2), for receiving a bearing for the rotational movement of the fan wheel (1) on the shaft, in the bearing bracket or in the casing (12), and wherein the ring (10) preferably has a flange (11) for fitting onto the fan device.

3. The fan device as claimed in any one of the preceding claims, wherein the hub of the fan wheel (1) has reluctance gaps.

4. An electric machine, in particular an electromotive drive, comprising a shaft (3) and a fan device as claimed in any one of the preceding claims mounted thereon, or comprising a bearing bracket or casing (12) and a fan device as claimed in any one of the preceding claims mounted therein as well as a shaft (3).

5. The electric machine as claimed in claim 4, wherein a second ring (7), preferably made of steel, is fixed on the shaft, which ring has on its outer circumference a permanent-magnet device (4) and is positioned relative to the hub of the fan wheel (1) so as to enable an optimal magnetic interaction between the permanent-magnet device (4) and the magnetizable component (2).

6. A method for the production of a fan device as claimed in any one of claims 1 to 3, comprising the steps:
- provision of a mold for the fan wheel (1),
- insertion of the multiple partial laminated core rings (2) with slots into the hub area of the mold,
- sealing of the mold including the slots in the partial laminated core rings (2) with aluminum, wherein the magnetizable component (2) is subdivided among the multiple partial laminated core rings in such a manner that the aluminum penetrates the respective slots, which are correspondingly shortened, more easily, enabling the aluminum to flow in from more than one side.

7. The method for the production of an electric machine as claimed in claim 4 or claim 5, comprising the method steps as claimed in claim 6, wherein the permanent-magnet device (4) is fastened on the second ring (7) and is protected against centrifugal force and corrosion, and the second ring (7) is then mounted onto the shaft (3).

## Revendications

1. Dispositif ventilateur comprenant une roue (1) de ventilateur qui a un moyeu pour fixer la roue (1) de ventilateur sur un arbre (3) dans un flasque ou dans une enveloppe (12), la roue (1) de ventilateur étant en aluminium et un composant (2) magnétisable étant logé dans le moyeu,
**caractérisé en ce que** des parties métalliques du moyeu ont la fonction d'un enroulement d'amortissement et le composant (2) magnétisable est constitué de plusieurs anneaux partiels de paquet de tôle, les anneaux partiels de paquet de tôle ayant des encoches pour des barreaux de cage, la roue (1) de ventilateur étant coulée en aluminium d'un seul tenant avec le moyeu et le composant (2) magnétisable étant coulé dans le moyeu et tournant librement, le composant (2) magnétisable étant subdivisé en les plusieurs anneaux de paquet de tôle, de sorte que l'aluminium pénètre légèrement dans les encoches respectives qui sont raccourcies de manière correspondante et qu'une incorporation de l'aluminium de plusieurs côtés soit rendue possible.

2. Dispositif ventilateur suivant la revendication 1, dans lequel, en étant décalé dans ou sur le moyeu axialement du composant (2) magnétisable, un premier anneau (10), de préférence en acier, est monté dans le flasque ou dans l'enveloppe (12) pour loger un palier pour le mouvement de rotation de la roue (1) de ventilateur sur l'arbre et dans lequel l'anneau (10) a de préférence une bride (11) pour le montage sur le dispositif ventilateur.

3. Dispositif ventilateur suivant l'une des revendications précédentes, dans lequel le moyeu de la roue (1) de ventilateur a des lacunes de réluctance.

4. Machine électrique, notamment entraînement par moteur électrique, comprenant un arbre (3) et un dispositif ventilateur qui y est monté suivant l'une des revendications précédentes ou comprenant un flasque ou une enveloppe (12) et un dispositif ventilateur qui y est monté suivant l'une des revendications précédentes, ainsi qu'un arbre (3).

5. Machine électrique suivant la revendication 4, dans laquelle sur l'arbre est immobilisé un deuxième anneau (7), de préférence en acier, qui a sur son pourtour extérieur un dispositif (4) à aimants permanents et qui est placé par rapport au moyeu de la roue (1) de ventilateur de façon à rendre possible une interaction magnétique la meilleure entre le dispositif (4) à aimants permanents et le composant (2) magnétisable.

6. Procédé de fabrication d'un dispositif ventilateur suivant l'une des revendications 1 à 3, comprenant les stades dans lesquels :
- on se procure une lingotière de coulée pour la roue (1) de ventilateur ;
- on insère les multiples anneaux (2) partiels de paquet de tôle ayant des encoches dans la zone de moyeu de la lingotière de coulée ;
- on coule de l'aluminium dans la lingotière de coulée, y compris dans les encoches des anneaux (2) partiels de paquets de tôle, le composant (2) magnétisable étant subdivisé en les plusieurs anneaux partiels de paquet de tôle de façon à ce que l'aluminium pénètre facilement dans les encoches respectives qui sont raccourcies de manière correspondante et qu'une incorporation de plusieurs côtés de l'aluminium soit rendue possible ;
- après l'opération de coulée, on alèse au tour le pourtour intérieur du moyeu afin que le composant (2) magnétisable se trouve à découvert à l'intérieur du moyeu.

7. Procédé de fabrication d'une machine électrique suivant la revendication 4 ou 5, comprenant les stades de procédé suivant la revendication 6, dans lequel on fixe le dispositif (4) à aimants permanents sur le deuxième anneau (7) et on le protège de la force centrifuge et de la corrosion et on monte ensuite le deuxième anneau (7) sur l'arbre (3).
